# EUROPEAN PATENT APPLICATION

(11) **EP 1 915 932 A1**
(43) Date of publication of application: **30.04.2008**
(21) Application number: 06425741.3
(22) Date of filing: 27.10.2006
(51) Int. Cl.: A47J 31/46

(54) **A machine for the preparation of coffee**

(71) Applicant: Pres-Block S.P.A., 10040 Caselette (IT)
(72) Inventor: Rossato, Franco, 10091 Alpignano (IT)
(74) Representative: D'Angelo, Fabio

(57) **Abstract**

A machine (1) for the preparation of coffee, comprising a reservoir (4), an outlet (2) for the coffee, a pump (6) respectively connected to the reservoir (4) and the outlet (2) through a suction conduit (8) and a delivery conduit (10), a by-pass conduit (16) connecting the suction and delivery conduits (8, 10) in parallel to the pump (6), and a single valve (20) arranged along the by-pass conduit (16), which defines a cavity (21) respectively communicating through a first and a second aperture (22, 23) with the suction and delivery conduits (8, 9) and displaceably housing a shutter element (24) available in a closure position of the second aperture (23), in the case in which the pressure in the delivery conduit (10) is below a first threshold value (P₁), in a closure position of the second aperture (22), in the case in which the pressure in the delivery conduit (10) is above a second threshold value (P₂), which is higher than the first threshold value (P₁), and in a detached position from both of the apertures (22, 23), in the case in which the pressure in the delivery conduit (10) is comprised between the first and the second threshold values (P₁, P₂).

## Description

The present invention relates to a machine for the preparation of coffee, specifically of the high pressure type, intended for a household use, to which the following description will explicitly refer to without thereby departing from generality.

As it is known, the above-recalled type of machines, in which loose or cartridge pre-packed powder coffee is inserted in a dedicated housing arranged at the machine outlet, are commercially widespread; the pressurised hot water flow through such a housing determines the instantaneous preparation and delivery of coffee.

The above said machines are provided with a fluidic circuit essentially comprising a water collection reservoir, a boiler for the heating of the water directly connected to the outlet, and a pump connecting the reservoir to the boiler.

More specifically, the pump displays an inlet section connected to the reservoir through a suction conduit, and an outlet section connected to the boiler through a delivery conduit.

Such machines may also be provided with a further outlet for the discharge of steam to be employed, for example, for the preparation of cappuccino.

In practice, in the case in which the user wishes to prepare coffee, he must switch on both the boiler and the pump so as to induce pressurised hot water to flow through the cartridge placed in the corresponding outlet. If he instead wishes to simply prepare cappuccino, there is no need to switch on the pump, whereas it is required to switch on an additional electric resistor to further increase the water temperature (and, therefore, the pressure), to immerse the steam outlet within the container with milk and to actuate a valve having an adjustable section, placed along the conduit connecting the boiler to said outlet, in order to adjust the steam inflow.

Once the pump has been switched off, stagnation of pressurised water may occur in the part of circuit interposed between the pump itself and the hot water outlet, possibly leading to subsequent and undesired dripping from such an outlet.

In order to avoid the above said problem, a by-pass conduit extending in parallel to the pump is designed between the suction conduit and the delivery conduit.

A valve assembly formed by two on-off valves, specifically a mechanically driven check valve and an electrovalve, is placed on such a by-pass conduit. Both of the above said valves are adapted to prevent the water flow from the delivery conduit and, therefore, from the boiler, towards the suction conduit and, therefore, towards the reservoir under different operation conditions.

The check valve prevents such a flow if the pressure in the delivery conduit is below a predetermined threshold value P₁, for instance corresponding to 3 - 3,5 bars. In practice, such a valve assures the maintenance of a minimum water pressure value inside the boiler.

The electrovalve prevents the flow through the by-pass conduit in the case in which the pump is switched on and, therefore, pressures significantly above the threshold value P₁ (pressures on the order of 10 - 12 bars, for instance) occur in the delivery conduit.

The electrovalve is of the two-position and two-way type, normally opened and driven to closure by the actuation of the pump.

When the pump is switched off, the electrovalve may return to the open position allowing the pressurised water left in the part of circuit downstream of the pump to return to the reservoir. Such a flow may continue as long as the progressively decreasing pressure in the delivery conduit is maintained above the threshold value P₁. Having reached such a value, the check valve prevents further water flows through the by-pass conduit to the reservoir.

When the pump is not under head, the known type machines may also be provided with a discharge valve placed along the delivery conduit and actuatable in order to allow the discharge of the air contained in the pump itself and the subsequent triggering of the latter.

Even if the above described known machines are universally employed because they are reliable and efficient, they do have the main drawback of displaying relatively complicated and expensive fluidic circuits and requiring lengthy assembly times. What has just been set forth above is essentially due to the presence of a relatively high number of valves to be assembled on the various conduits.

It is the object of the present invention to design a machine for the preparation of coffee allowing to solve the problems set forth above in a simple and cost-effective manner, being at the same time simple and cost-effective to construct and having high efficiency and operational reliability.

According to the present invention there is designed a machine for the preparation of coffee, comprising:
- a water collection reservoir;
- an outlet for the coffee;
- pumping means to withdraw water from said reservoir and convey it to said outlet;
- a suction conduit connecting said reservoir to an inlet section of said pumping means;
- a delivery conduit connecting an outlet section of said pumping means to said outlet;
- a by-pass conduit connecting said suction and delivery conduits in parallel to said pumping means; and
- a valve assembly arranged along said by-pass conduit to prevent one-way flows from said delivery conduit to said suction conduit, when the pressure in said delivery conduit is below a first threshold value, and to maintain separate and fluid sealed said delivery and suction conduits during the actuation of said pumping means;
characterised in that said valve assembly comprises a single valve defining a cavity respectively communicating through a first and a second aperture with said suction and delivery conduits and displaceably containing a shutter element available in a first closure position of one of said first and second apertures, in the case in which the pressure in said delivery conduit is below said first threshold value, in a second closure position of another of said first and second apertures, in the case in which the pressure in said delivery conduit is above a second threshold value, which is in turn above said first threshold value, and in a detached position from both said first and second aperture, in the case in which the pressure in said delivery conduit is comprised between said first and second threshold value.

The invention will now be described with reference to the accompanying drawings, which show a non limitative example of embodiment, in which:
- figure 1 schematically shows a machine for the preparation of coffee, designed according to the principles of the present invention;

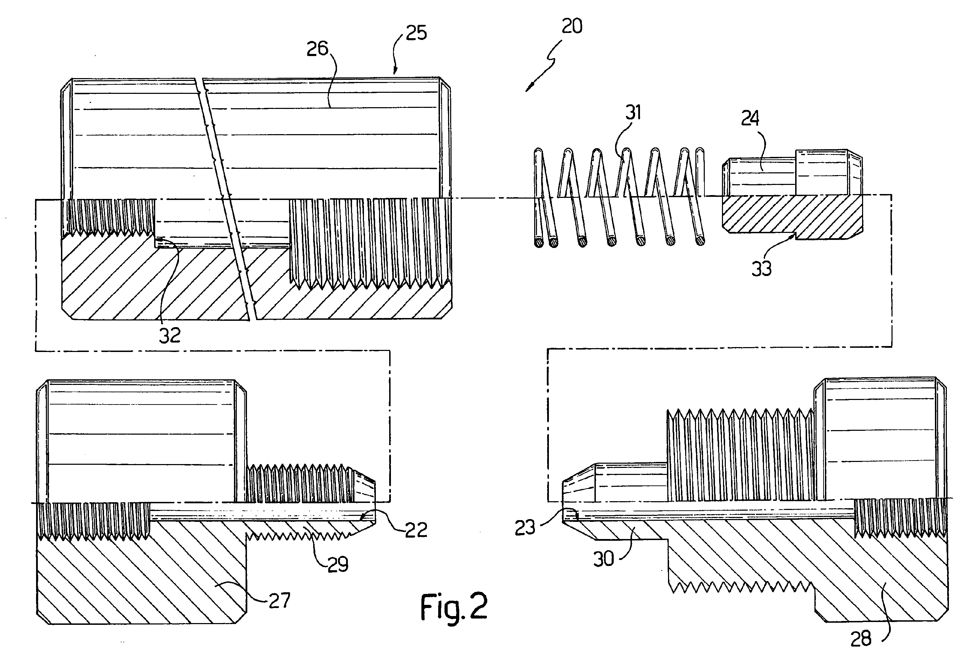

- figure 2 is an exploded side view, in partial and enlarged section, of a by-pass valve of the machine of figure 1; and
- figures from 3 to 5 are axial sections of the valve of figure 2 in three different operational positions.

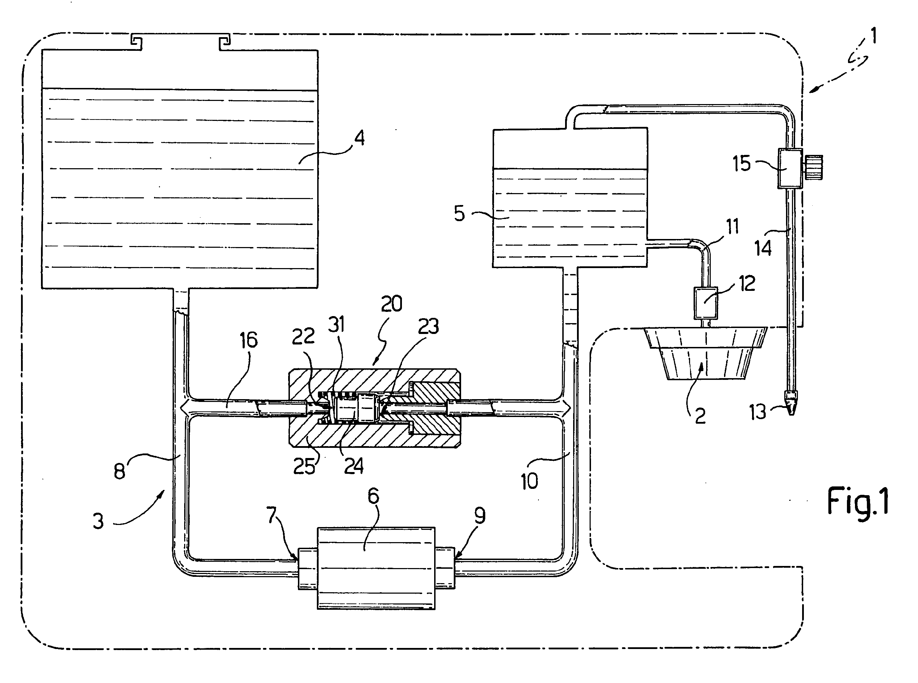

In Figure 1, number 1 indicates, as a whole, a machine for the preparation of coffee, specifically a high pressure machine intended for a household use.

The machine 1 is of the type adapted to allow the mixing of powder coffee with pressurised water. Specifically, loose coffee or coffee pre-packed in a cartridge (which is known and therefore not shown) is adapted to be inserted in an appropriate housing arranged at an outlet 2 of the machine 1; the pressurised hot water flow through such a housing determines the instantaneous preparation and delivery of coffee.

As shown in figure 1, the machine 1 is provided with a fluidic circuit 3 essentially comprising a water collection reservoir 4, a boiler 5 for the heating of the water, directly connected to the outlet 2, and a pump 6 connecting the reservoir 4 to the boiler 5.

Specifically, the pump 6 (which is known and only schematically shown) displays an inlet section 7, connected to the reservoir 4 through a suction conduit 8, and an outlet section 9 connected to the boiler 5 through a delivery conduit 10.

The connection of the boiler 5 to the outlet 2 is obtained through a further conduit 11 on which a check valve 12 is placed in a known manner.

The machine 1 is also provided in a known manner with a further outlet 13 for the steam connected through a conduit 14 to an upper portion of the boiler 5. Along the conduit 14 there is also positioned in a known manner an adjustable section valve 15 in order to allow both the interruption and the adjustment of the inflow of steam to the outlet 13.

The fluidic circuit 3 also comprises a by-pass conduit 16 connecting the suction and delivery conduits 8, 10 in parallel to the pump 6.

Advantageously, on the by-pass conduit 16 there is arranged a single valve 20, which defines a cavity 21 respectively communicating through two distinct apertures 22, 23 with the suction and delivery conduits 8, 10, and displaceably containing a shutter element 24.

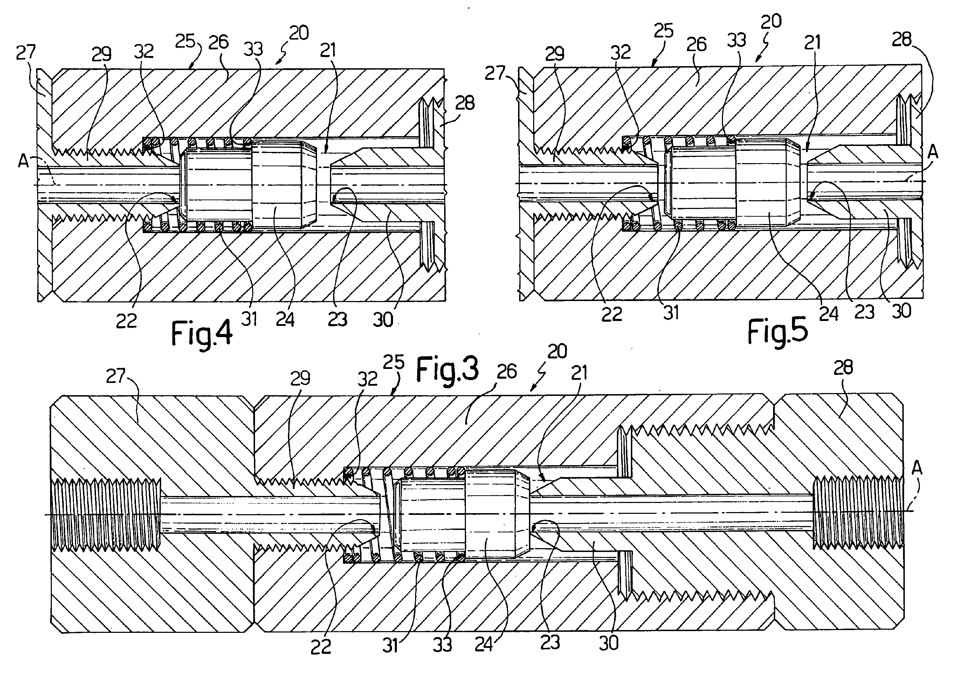

Such a shutter element 24 is respectively available in:
- a first closure position of the aperture 23 (figure 3) reached in the case in which the pressure in the delivery conduit 10 is below a first threshold value P₁, for instance equivalent to 3.5 bars;
- a second closure position of the aperture 22 (figure 4) reached in the case in which the pressure in the delivery conduit 10 is above a second threshold value P₂, for instance equivalent to 10 bars, which is in turn above the first threshold value P₁; and
- in a position detached from both apertures 22 and 23 (figure 5), reached in the case in which the pressure in the delivery conduit 10 is comprised between the first threshold value P₁ and the second threshold value P₂.

Specifically, the valve 20 comprises an essentially cylindrical external body 25 formed by three tubular elements 26, 27, 28, which are aligned and coaxial to an axis A, in this case shown matching with the axis of the by-pass conduit 16, and partially inserted one into the other; more specifically, the element 26 is an intermediate element, whereas the elements 27 and 28 are head elements axially mounted on opposite parts on the element 26 and defining respective passage sections having a diameter smaller than the diameter of the minimum passage section defined by the element 26 itself.

Both the elements 27, 28 are screwed into respective axial end portions of the element 26, which are internally threaded, and they lead inside the passage section of the element 26 itself with respective axial appendixes 29, 30 having a terminal configuration displaying the shape of a truncated cone.

The appendixes 29, 30 are arranged at a predetermined reciprocal axial distance inside the passage section of the element 26 and delimit cavity 21 with the latter; the apertures 22, 23 are therefore defined by the terminal sections of the respective appendixes 29, 30. On the opposite side, each element 27, 28 is joint to a respective portion of the by-pass conduit 16.

The shutter element 24 is preferably formed by elastomeric material and displays a generally cylindrical external configuration adapted to allow the free axial displacement inside the cavity 21.

The valve 20 also comprises a spring 31, preferably of the cylindrical propeller type, interposed between an internal annular shoulder 32 of the element 26, arranged in a position facing the aperture 23, and an external annular shoulder 33 of the shutter element 24.

The spring 31 exerts an elastic force on the shutter element 24 such that it maintains it in abutment against the appendix 30 thus determining the closure of the aperture 23. The spring 31 is set on an equivalent pressure value equal to the first threshold value P₁.

The external surfaces of the appendix 30 and shutter element 24 are designed, at least in the reciprocal cooperation area, with values of roughness sufficient to assure the fluidic seal in the presence of liquids and steam but suitable to allow the blow-by of the air; in this manner, the discharge of the air during the triggering step of the pump 6 is assured without requiring additional discharge valves.

Ultimately, the valve 20, placed along the by-pass conduit 16, allows to carry out the following functions:
a) to prevent one-way flows from the delivery conduit 10 to the suction conduit 8, when the pressure in the delivery conduit 10 is below the first threshold value P₁;
b) to maintain separate and fluid sealed the delivery and suction conduits 10, 8, when the pressure in the delivery conduit 10 is above the second threshold value P₂, i.e. during the actuation of the pump 6; and
c) to allow the discharge of the air during the triggering step of the pump 6 without the need for auxiliary discharge valves.

During use, under the condition in which neither the boiler 5 nor the pump 6 are switched on, the shutter element 24 of the valve 20 is biased by the spring 31 in abutment against the appendix 30 so as to close the aperture 23; under these conditions, the valve 20 allows to maintain the water left in the boiler 5 at a minimum pressure level, higher with respect to that of the water in the reservoir 4.

The simple switching on of the boiler 5 does not determine any modification in the configuration of the valve 20. Under this condition, by manually operating the valve 15, it is possible to adjust the inflow of steam through the corresponding outlet 13.

In the case in which the pump 6 is switched on, the achievement of a pressure in the delivery conduit 10 above the second threshold value P₂ determines a displacement of the shutter element 24 of the valve 20 against the bias of the spring 31 until it is taken in abutment against the appendix 29 and it closes the aperture 22.

Therefore, the water withdrawn from the reservoir 4 by the pump 6 is conveyed through the delivery conduit 10 in the boiler 5 and from here to the outlet 2 without any possibility of flowing back through the by-pass conduit 16.

When the pump 6 is switched off, the pressure in the delivery conduit 10 is reduced decreasing below the second threshold value P₂. Under this condition the force exerted by the pressurised water in the delivery conduit 10 is no longer sufficient to maintain the shutter element 24 in abutment against the appendix 29, with the subsequent detachment of the shutter element 24 itself from the aperture 22; on the other side, the elastic force of the spring 31 is not sufficient to overcome the resistance induced by the pressurised water in the delivery conduit 10 so as to bring the shutter element 24 in abutment against the opposite appendix 30 to close the aperture 23.

The shutter element 24 is therefore maintained in an intermediate position inside the cavity 21, in which it is detached from both of the apertures 22 and 23. A water flow from the delivery conduit 10 to the suction conduit 8 through the by-pass conduit 16 is therefore established. Such a flow ceases when the pressure in the delivery conduit 10 decreases below the first threshold value P₁ and therefore the shutter element 24 may return to the position in which it closes the aperture 23.

From the above said, it is apparent that the machine 1 described here is, with respect to the known solutions, particularly simple as far as design and assembly are concerned and particularly advantageous as far as costs are concerned. What has been set forth above is essentially due to the use of a single mechanical-type valve 20 to carry out the previously specified functions a), b) and c), which are carried out in machines of the known-type by respective dedicated valves having, in some cases, an electric control.

It is finally apparent that modifications and variants may be made to the described machine 1 without thereby departing from the protective scope defined by the claims.

## Claims

1. A machine (1) for the preparation of coffee, comprising:
- a water collection reservoir (4);
- an outlet (2) for the coffee;
- pumping means (6) to withdraw the water from said reservoir (4) and convey it to said outlet (2);
- a suction conduit (8) connecting said reservoir (4) to an inlet section (7) of said pumping means (6);
- a delivery conduit (10) connecting an outlet section (9) of said pumping means (6) to said outlet (2);
- a by-pass conduit (16) connecting said suction and delivery conduits (8, 10) in parallel to said pumping means (6); and
- a valve assembly (20) arranged along said by-pass conduit (16) to prevent one-way flows from said delivery conduit (10) to said suction conduit (8), when the pressure in said delivery conduit (10) is below a first threshold value (P₁), and to maintain separate and fluid sealed said delivery and suction conduits (10, 8) during the actuation of said pumping means (6);
**characterised in that** said valve assembly comprises a single valve (20) defining a cavity (21) respectively communicating through a first and second aperture (22, 23) with said suction and delivery conduits (8, 9) and displaceably containing a shutter element (24) available in a first closure position of one (23) of said first and second apertures (22, 23), in the case in which the pressure in said delivery conduit (10) is below said first threshold value (P₁) , in a second closure position of another (22) of said first and second apertures (22, 23), in the case in which the pressure in said delivery conduit (10) is above a second threshold value (P₂), which is in turn above said first threshold value (P₁), and in a detached position from both said first and second apertures (22, 23), in the case in which the pressure in said delivery conduit (10) is comprised between said first and second threshold values (P₁, P₂).

2. A machine according to claim 1, **characterised in that** said valve (20) also comprises elastic means (31) which load said shutter element (24) to said first closure position and are set on an equivalent pressure value equal to said first threshold value (P₁).

3. A machine according to claim 1 or 2, **characterised in that** said shutter element (24) closes said second aperture (23) in said first closure position and said first aperture (22) in said second closure position.

4. A machine according to claim 3, **characterised in that** the external surface of said shutter element (24) and the external surface of the edge of said second aperture (23) display, at least in the reciprocal interaction area, roughness values sufficient to assure the fluidic seal in the presence of liquids and steam though suitable to allow the blow-by of the air.

5. A machine according to any of the preceding claims, **characterised in that** it comprises heating means (5) interposed between said pumping means (6) and said outlet (2).
